# EUROPÄISCHE PATENTSCHRIFT

(11) **EP 2 236 999 B1**
(45) Veröffentlichungstag und Bekanntmachung des Hinweises auf die Patenterteilung: **18.11.2020**
(21) Anmeldenummer: 09157117.4
(22) Anmeldetag: 01.04.2009
(51) Int. Cl.: G01F 23/00, G06F 12/00

(54) **Feldgerät mit zwei Prozessoren**
Field device with two processors
Appareil de terrain doté de deux processeurs

(43) Veröffentlichungstag der Anmeldung: 06.10.2010
(73) Patentinhaber: VEGA Grieshaber KG, 77709 Wolfach (DE)
(72) Erfinder: RAUER, Winfried, 77716, Fischerbach (DE); GAISER, Martin, 72275, Alpirsbach (DE); KOPP, Manfred, 77709, Wolfach (DE); SCHÄTZLE, Ralf, 77716, Fischerbach (DE)
(74) Vertreter: Maiwald Patent- und Rechtsanwaltsgesellschaft mbH

(56) Entgegenhaltungen:
- WO-A-2004/017025
- WO-A-2004/104525
- WO-A2-00/65415
- US-A- 4 815 323
- US-A- 5 485 401
- US-A- 5 534 849
- US-A1- 2005 113 942
- PATTABIRAMAN K ET AL: "software critical memory: all memory is not created equal" INTERNET CITATION, [Online] Nr. MSR-TR-2006-128, 1. September 2006 (2006-09-01), Seiten 1-12, XP002525828 Gefunden im Internet: URL:http://research.microsoft.com/pubs/703 42/tr-2006-128.doc> [gefunden am 2009-04-15]

## Beschreibung

### Gebiet der Erfindung

Die Erfindung betrifft die Füllstands-, Druck- und Dichtemessung. Insbesondere betrifft die Erfindung eine Elektronikeinheit, beispielsweise ein Feldgerät zum Messen eines Füllstands, eines Drucks oder einer Dichte eines Mediums in einem Behälter oder ein Auswertegerät, ein Verfahren zur Messung und Bestimmung eines Füllstands, eines Drucks oder einer Dichte eines Mediums in einem Behälter, ein Programmelement sowie ein computerlesbares Medium.

### Technologischer Hintergrund

Entwicklungen hinsichtlich "funktionaler Sicherheit" im Bereich der Füllstandmessung, der Druckmessung und/oder der Dichtemessung erfordern oft einen hohen Aufwand an Zeit und Qualifikation des Entwicklungsteams.

Die Mess- oder Auswertegeräte, die eine Sicherheitsfunktion ausführen, haben in der Regel weitere Funktionen, die keinen Beitrag zur Ausführung der Sicherheitsfunktion liefern. Nicht-sicherheitsgerichtete Funktionen müssen in der Regel hinsichtlich ihrer Rückwirkung auf die Sicherheitsfunktion betrachtet werden. Dies kann zur Folge haben, dass auch diese Funktionalitäten meist kritisch eingestuft werden müssen und somit ein erhöhter Entwicklungsaufwand entsteht.

Die Druckschrift WO2004/104525 A offenbart eine Steuerung, die dazu ausgeführt ist, bei einem hohen und einem niedrigen Niveau in einem Tank einen Alarm auszulösen. Die Steuerung weist ein Relais auf, dessen Funktion auch durch einen Transistorschaltkreis ausgeführt werden kann, und umfasst einen Alarmschaltkreis, der Steuerlogik bereitstellt. Darüber hinaus weist die Steuerung einen Auswahlschalter auf, mit dem das Relais geschaltet werden kann. Durch Schalten des Auswahlschalters kann die Steuerung elektrisch von anderen Komponenten isoliert werden.

Die WO2004/017025 offenbart ein System zur Herstellung einer modular aufgebauten Vorrichtung zur Bestimmung einer physikalischen Prozessgröße. Die Vorrichtung weist verschiedene Einheiten auf, wie etwa eine Sensorelektronikeinheit oder eine Auswerteeinheit, die einen Mikroprozessor aufweisen können. Darüber hinaus wird erwähnt, dass jeder Sensor einem gewissen Sicherheitskonzept entsprechen muss, zum Beispiel Explosionsschutz-Vorschriften.

In der US 2005/0113942 A1 wird eine Prozesseinrichtung mit einer Beaufsichtigungs-Überschicht offenbart. Gemäß der Lehre dieser Druckschrift kann ein Bauteil sicherheitstechnisch derart durch eine hardware- und software-Komponenten umfassende Beaufsichtigungs-Überschicht aufgerüstet werden, so dass das Bauteil anschließend höheren Sicherheitsanforderungen genügt.

### Zusammenfassung der Erfindung

Es ist eine Aufgabe der Erfindung, eine Elektronikeinheit für die Füllstand- Druck- oder Dichtemessung bereitzustellen, welche erhöhten Sicherheitsanforderungen genügt.

Es sind eine Elektronikeinheit für die Füllstandmessung, die Druckmessung oder die Dichtemessung eines Mediums in einem Behälter, insbesondere für ein Messgerät oder ein Auswertgerät, ein Verfahren zur Messung und Bestimmung eines Füllstands, eines Drucks und/oder einer Dichte eines Mediums in einem Behälter, ein Programmelement und ein computerlesbares Medium gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Elektronikeinheit, das Verfahren, das Programmelement und das computerlesbare Medium. In anderen Worten lassen sich die im Folgenden im Hinblick auf die Elektronikeinheit genannten Merkmale auch in dem Verfahren, dem Programmelement oder dem computerlesbaren Medium implementieren, und umgekehrt.

Gemäß einem Ausführungsbeispiel der Erfindung ist eine, beispielsweise modulare Elektronikeinheit für die Füllstandmessung, die Druckmessung oder die Dichtemessung eines Mediums in einem Behälter angegeben, die Elektronikeinheit aufweisend einen ersten Prozessor und einen zweiten Prozessor, wobei die Elektronikeinheit zum Ausführen von sicherheitskritischen und nicht-sicherheitskritischen Funktionen ausgeführt ist, und wobei der erste Prozessor zum

Ausführen nur der nicht-sicherheitskritischen Funktionen und der zweite Prozessor zum Ausführen der sicherheitskritischen Funktionen ausgeführt ist.

Auf diese Weise kann die Trennung von sicherheitskritischen Funktionen der Elektronikeinheit und nicht-sicherheitskritischen Funktionen der Elektronikeinheit (wie beispielsweise Diagnose, Datenlogger, Statistik, Messwertanzeige) erreicht werden.

Aufgrund der Trennung der beiden Prozessoren und damit der verschiedenen Funktionen, die in der Elektronikeinheit ausgeführt werden, können die nicht-sicherheitskritischen bzw. nicht-sicherheitsgerichteten Funktionen mit einem geringerem Aufwand entwickelt werden als die übrigen Funktionen. Somit ist es auch möglich, Softwareteile oder Hardwareteile einzusetzen, die bereits vorhanden sind oder eingekauft werden und keine erhöhten Anforderungen hinsichtlich der Sicherheitsintegrität erfüllen.

Ob ein Programmmodul bzw. eine Funktion (die dann auf einem der Prozessoren ausgeführt wird) als sicherheitskritisch oder als nicht-sicherheitskritisch einzustufen ist, bemisst sich an der Sicherheitsanforderungsstufe, die diese Funktion erfüllen muss. Die Sicherheitsanforderungsstufe ist ein Begriff aus dem Gebiet der funktionalen Sicherheit und wird auch als Sicherheitsintegritätslevel (SIL) bezeichnet. Aus der angestrebten Sicherheitsanforderungsstufe ergibt sich das sicherheitsgerichtete Konstruktionsprinzip, das einzuhalten ist, damit das Risiko einer Fehlfunktion den gestellten Anforderungen genügt.

Ist eine Funktion als sicherheitskritisch eingestuft, bedeutet dies beispielsweise, dass diese Funktion den Anforderungen von SIL3 oder sogar SIL4 oder SIL2 zu genügen hat. Ist eine Funktion als nicht oder nur in geringem Maße als sicherheitskritisch eingestuft, bedeutet dies beispielsweise, dass die den Anforderungen von SILO oder SIL1 zu genügen hat.

Wenn also nun im Folgenden davon die Rede ist, dass der zweite Prozessor zum Ausführen der sicherheitskritischen Funktionen bzw. Programmmodule der Elektronikeinheit und der erste Prozessor zum Ausführen nur ausschließlich der nicht-sicherheitskritischen Funktionen bzw. Programmmodule ausgeführt ist, ist darunter zu verstehen, dass der zweite Prozessor höheren Sicherheitsanforderungen genügt als der erste Prozessor. Beispielsweise genügt der zweite Prozessor den Sicherheitsanforderungen SIL3 oder SIL4, oder in bestimmten Ausführungen auch lediglich SIL2, wohingegen der erste Prozessor lediglich dem Standard SIL0 oder SIL1 genügt.

Gemäß einem weiteren Ausführungsbeispiel der Erfindung ist die Elektronikeinheit auch zum Betrieb ohne den zweiten Prozessor ausgeführt. Insbesondere kann die Elektronikeinheit modular ausgeführt sein, so dass sie leicht für den entsprechenden Einsatz zusammengestellt werden kann.

Gemäß einem weiteren Ausführungsbeispiel der Erfindung sind der erste Prozessor und der zweite Prozessor zum gegenseitigen Datenaustausch ausgeführt.

In anderen Worten können die sicherheitsgerichteten Funktionen auf dem zweiten Prozessor ausgeführt werden. Benötigt der erste Prozessor nun bestimmte Daten vom zweiten Prozessor, kann der zweite Prozessor diese Daten an den ersten Prozessor übergeben (und umgekehrt). Dieser Datenaustausch wird allerdings von einem Steuerprogramm überwacht, so dass eine Art "Firewall" zwischen den beiden Prozessen etabliert ist, um unbeabsichtigten Datenaustausch zu vermeiden.

Gemäß einem weiteren Ausführungsbeispiel der Erfindung ist weiterhin ein Echtzeit-Betriebssystem vorgesehen, das den Sicherheitsanforderungen der Elektronikeinheit entspricht und zur Steuerung des Datenaustauschs zwischen den beiden Prozessoren ausgeführt ist.

Ein solches Betriebssystem kann entweder zentral installiert sein. Auch ist es möglich, dass jeweils ein Betriebssystem auf einem der Prozessoren installiert ist.

Gemäß einem weiteren Ausführungsbeispiel der Erfindung sind die beiden Prozessoren derart voneinander getrennt, dass Daten in einem Speicher des zweiten Prozessors unabhängig von Daten in einem Speicher des ersten Prozessors sind.

Die gespeicherten Daten sind also voneinander getrennt. Sollte ein Datenaustausch erforderlich sein, wird dieser von dem Betriebssystem koordiniert .

Gemäß einem weiteren Ausführungsbeispiel der Erfindung handelt es sich bei den sicherheitskritischen Funktionen beispielsweise um die Messwertbestimmung auf Basis von Sensormessdaten, die der Messsensor der Elektronikeinheit aufgenommen hat. Auch kann es sich um die Ableitung von weiteren Messwerten auf Basis der bereits bestimmten Messwerte und/oder um die Ausgabe von Messwerten und/oder Diagnose von bestimmten Funktionen der Elektronikeinheit bzw. der Feldgeräts handeln.

Gemäß einem weiteren Ausführungsbeispiel der Erfindung handelt es sich bei den nicht-sicherheitskritischen Funktionen beispielsweise um die Verbindungsherstellung zwischen dem Feldgerät und einer externen Kommunikationseinheit, die Aufzeichnung von Messwerten mit entsprechender Statusinformation über die Zeit, um die Messwertanzeige und/oder eine Werteeinstellung im Feldgerät.

Gemäß einem weiteren Ausführungsbeispiel der Erfindung ist das Feldgerät als Füllstandradar ausgeführt. Die Kommunikation mit der externen Kommunikationseinheit erfolgt hierbei auf Basis eines Profibus Standards oder eines Foundation Fieldbus Standards. Der zweite Prozessor ist hierbei zur Ausführung der sicherheitskritischen Schichten der Kommunikation und der erste Prozessor zur Ausführung der nicht-sicherheitskritischen Schichten der Kommunikation ausgeführt.

Gemäß einem weiteren Ausführungsbeispiel der Erfindung weist der zweite Prozessor einen Datenspeicher zum Speichern von Programmmodulen auf, wobei der Datenspeicher in zumindest einen ersten und einen zweiten Speicherbereich aufgeteilt ist, die voneinander getrennt sind. Der erste Speicherbereich speichert diejenigen Programmmodule, die zum sicheren Betrieb der Elektronikeinheit bzw. des Feldgeräts benötigt werden und somit als sicherheitskritisch eingestuft sind, und der zweite Speicherbereich speichert diejenigen Daten, die zum Übertragen an den ersten Prozessor vorgesehen sind.

Gemäß einem weiteren Ausführungsbeispiel der Erfindung sind die beiden Speicherbereiche Teil einer Speicherverwaltungseinheit, bei der es sich beispielsweise um eine sog. Memory Management Unit (MMU) handelt. Die Speicherverwaltungseinheit dient der Abschottung der Programmmodule und Daten, die auf den verschiedenen Speicherbereichen gespeichert sind. Die Speicherverwaltungseinheit kann eine externe Zusatzkomponente zu einem Mikroprozessor sein. Auch kann sie in den Mikroprozessor integriert sein. Die Speicherverwaltungseinheit regelt insbesondere auch Speicherschutzaufgaben. So können einzelne Speicherbereiche für die Ausführung durch bestimmte Programmmodule oder zum weiteren Beschreiben gesperrt werden.

Gemäß einem weiteren Ausführungsbeispiel der Erfindung ist die Trennung der beiden Speicherbereiche derart ausgeführt, dass kein im ersten Speicher gespeicherter Wert unbeabsichtigt verändert werden kann, so dass Daten, die im ersten Speicher gespeichert sind, unabhängig von Daten sind, die im zweiten Speicher gespeichert sind.

Gemäß einem Ausführungsbeispiel der Erfindung ist das Feldgerät ein Füllstandsmessgerät, das Radarsignale, geführte Mikrowellensignale, Ultraschallsignale oder kapazitive Signale verwendet oder auf einem radiometrischen Messprinzip beruht. Auch kann das Feldgerät als Grenzstandmessgerät ausgeführt sein.

Gemäß einem weiteren Ausführungsbeispiel der Erfindung ist die Elektronikeinheit Bestandteil eines Auswertegeräts oder eines Anzeige- und Bediengeräts.

Gemäß einem weiteren Ausführungsbeispiel der Erfindung ist ein Verfahren zur Messung und Bestimmung eines Füllstands, eines Drucks und/oder einer Dichte eines Mediums in einem Behälter durch ein Feldgerät angegeben, bei dem sicherheitskritische Funktionen des Feldgeräts durch einen zweiten Prozessor ausgeführt werden und bei dem lediglich nicht-sicherheitskritische Funktionen des Feldgeräts durch einen ersten Prozessor ausgeführt werden.

Gemäß einem weiteren Ausführungsbeispiel der Erfindung ist ein Programmelement zur Messung und Bestimmung eines Füllstands, eines Drucks und/oder einer Dichte eines Mediums in einem Behälter durch ein Feldgerät angegeben, das, wenn es auf zwei Prozessoren des Feldgeräts ausgeführt wird, die beiden Prozessoren anleitet, die oben angegebenen Verfahrensschritte durchzuführen.

Dabei kann das Programmelement z. B. Teil einer Software sein, die auf einem Prozessor der Elektronikeinheit bzw. des Feldgeräts gespeichert ist. Der Prozessor kann dabei ebenso Gegenstand der Erfindung sein. Weiterhin umfasst dieses Ausführungsbeispiel der Erfindung ein Programmelement, welches schon von Anfang an die Erfindung verwendet, sowie auch ein Programmelement, welches durch eine Aktualisierung (Update) ein bestehendes Programm zur Verwendung der Erfindung veranlasst.

Gemäß einem weiteren Ausführungsbeispiel der Erfindung ist ein computerlesbares Medium angegeben, auf dem ein Programmelement zur Messung und Bestimmung eines Füllstands, eines Drucks und/oder einer Dichte eines Mediums in einem Behälter durch ein Feldgerät gespeichert ist, das, wenn es auf zwei Prozessoren des Feldgeräts ausgeführt wird, die Prozessoren anleitet, die oben angegebenen Verfahrensschritte durchzuführen.

Im Folgenden werden mit Verweis auf die Figuren Ausführungsbeispiele der Erfindung beschrieben.

### Kurze Beschreibung der Figuren

Fig. 1a zeigt zwei Prozessoren mit Eingängen und Ausgängen gemäß einem Ausführungsbeispiel der Erfindung.
Fig. 1b zeigt beispielhaft eine Darstellung einer Elektronik für ein Füllstandsradargerät gemäß einem Ausführungsbeispiel der Erfindung.
Fig. 2 zeigt eine Darstellung einer Elektronik für ein Feldgerät gemäß einem weiteren Ausführungsbeispiel der Erfindung.
Fig. 3 zeigt eine Darstellung einer Elektronik für ein Feldgerät gemäß einem weiteren Ausführungsbeispiel der Erfindung.
Fig. 4 zeigt ein Füllstandsmessgerät gemäß einem weiteren Ausführungsbeispiel der Erfindung.
Fig. 5 zeigt ein Flussdiagramm eines Verfahrens gemäß einem Ausführungsbeispiel der Erfindung.
Fig. 6 zeigt eine Darstellung einer Elektronik für ein Auswertegerät gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

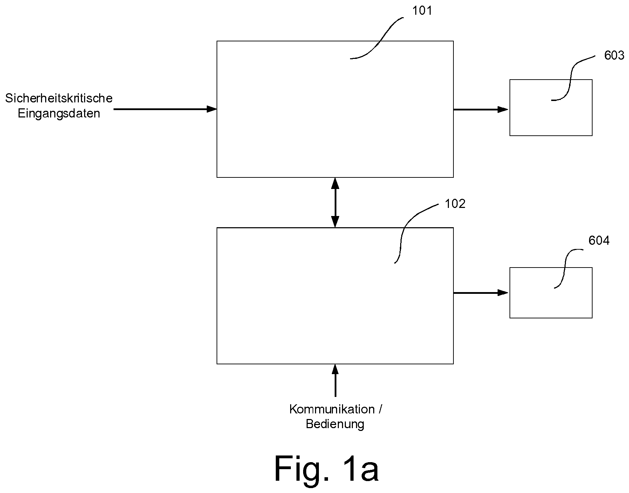

Fig. 1a zeigt zwei Prozessoren mit Eingängen und Ausgängen gemäß einem Ausführungsbeispiel der Erfindung. Der erste Prozessor 102 dient dem Ausführen nicht-sicherheitskritischer Funktionen, der zweite Prozessor 101 dem Ausführen sicherheitskritischer Funktionen. Beide Prozessoren können miteinander kommunizieren. Der erste Prozessor 102 erhält Kommunikations- bzw. Bedienungssignale und der zweite Prozessor erhält sicherheitskritische Eingangsdaten. Der erste Prozessor weist Nicht-SIL-Ausgänge 604 und der zweite Prozessor weist SIL-Ausgänge 603 auf.

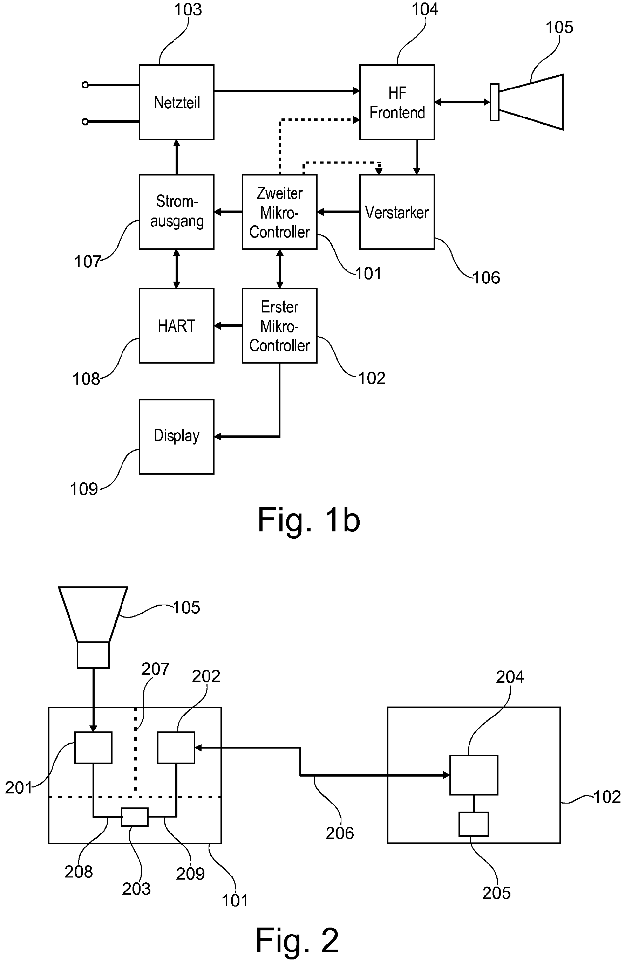

Fig. 1b zeigt beispielhaft eine Darstellung einer Elektronik für ein Füllstandsradargerät, welches einen zweiten Mikrocontroller oder Prozessor 101 und einen ersten Mikrocontroller oder Prozessor 102 aufweist. Die in den Fig. 1 bis 3 dargestellten Elektronikmodule können in verschiedene Feldgeräte oder Auswertegeräte eingebaut sein, beispielsweise in Füllstandradargeräten. Es ist zu beachten, dass die erfindungsgemäßen Elektronikmodule mit ihren beiden Prozessoren auch für Druckmessgeräte oder Dichtemessgeräte verwendet werden können.

Im Ausführungsbeispiel der Fig. 1 ist ein Netzteil 103 vorgesehen, welches das sog. HF-Frontend 104 mit Energie versorgt. Das HF-Frontend 104 ist an die Messantenne 105 angeschlossen. Das von der Antenne 105 empfangene Messsignal wird über das HF-Frontend 104 an einen Verstärker 106 weitergegeben. Der Verstärker 106 gibt das verstärkte Empfangssignal an den zweiten Prozessor 101 weiter, der die Messwertausgabe über den Stromausgang 107 steuert. Der Stromausgang 107 ist für die Messwertangabe an das Netzteil 103 und somit beispielsweise an eine 4...20mA Zweileiterschleife gekoppelt.

Natürlich können die Messwerte auch über andere Kommunikationsprotokolle, beispielsweise auch drahtlos über eine Funkverbindung an externe Geräte übergeben werden.

Der zweite Prozessor 101 ist kommunizierfähig (bi-direktional) mit dem ersten Prozessor 102 gekoppelt, wobei sichergestellt ist, dass vom ersten Prozessor nicht unbeabsichtigt Daten zum zweiten Prozessor übertragen werden können. Der erste Prozessor 102 ist mit einer grafischen Ausgabeeinheit (Display) 109 gekoppelt, um Messdaten zu visualisieren.

Weiterhin ist der erste Prozessor 102 mit dem HART Bus 108 verbunden, welchem er Daten übertragen kann. Der HART Bus 108 ist kommunizierfähig mit dem Stromausgang 107 gekoppelt (bi-direktional).

Auch kann der zweite Prozessor 101 auf das HF-Frontend 104 sowie auf den Verstärker 106 zugreifen, beispielsweise in Art einer Regelschleife.

Ein erfindungsgemäßes Messgerät für eine Prozessvariable wird also mit mindestens zwei Prozessoren aufgebaut. Es können auch mehr Prozessoren vorgesehen sein. Ein Prozessor übernimmt die Aufgaben, die der Sicherheitsfunktion zuzuordnen sind, z. B. die Steuerung der Hardware, die Messung und die Ausgabe des Messwerts. Ein weiterer Prozessor 102 führt die nicht-sicherheitskritischen Aufgaben, wie Bedienung oder Kommunikation aus. Beide Prozessoren kommunizieren miteinander.

Es sind also die sicherheitskritischen und die nicht-sicherheitskritischen Softwareteile und Hardwareteile voneinander getrennt. Die nicht-sicherheitskritischen Teile können die Sicherheitsfunktion nicht beeinträchtigen. Sicherheitsstandards müssen nur für die Teile des Gerätes angewandt werden, welche die sicherheitskritischen Funktionen durchführen. Das Ergebnis ist ein robusteres Gerät, das mit weniger Aufwand entwickelt werden kann.

Es ist also eine Trennung zwischen sicherheitskritischen und nicht-sicherheitskritischen Aufgaben innerhalb des Gerätes gegeben. Somit müssen nicht sämtliche Softwareteile und Hardwareteile nach Sicherheits-Standards entwickelt werden.

Fig. 2 zeigt ein weiteres Ausführungsbeispiel eines Elektronikmoduls, bei dem ebenfalls zwei voneinander getrennte Prozessoren 101, 102 vorgesehen sind.

Der eine, sicherheitskritische Prozessor 101 weist voneinander getrennte Speicherbereiche 201, 202 auf. Die gestrichelte Linie 207 symbolisiert die Grenze zwischen den beiden Speicherbereichen.

Weiterhin ist ein Echtzeit-Betriebssystem 203 vorgesehen, welches die Kommunikation zwischen den beiden getrennten Speicherbereichen 201, 202 steuert (siehe Kommunikationspfade 208 und 209).

Der erste Speicherbereich 201 ist mit dem Messwertaufnehmer 105 (beispielsweise eine Radarantenne oder ein Drucksensor) gekoppelt und wird mit Messwerten versorgt. In diesem Bereich 201 laufen auch die sicherheitskritischen Programmmodule. Benötigt der andere Prozessor 102 Daten des Prozessors 101, werden diese mit Hilfe des Betriebssystems 203 vom ersten Speicherbereich 201 in den zweiten Speicherbereich 202 transferiert und anschließend über den Kommunikationspfad 206 an den Speicherbereich 204 des anderen Prozessors 102 übergeben.

Der Prozessor 102 wird über ein gesondertes Betriebssystem 205 gesteuert.

Es ist also eine Doppeltrennung vorgesehen. Zum einen sind die beiden Prozessoren 101 und 102 voneinander getrennt und zum anderen sind außerdem die Speicherbereiche 201, 202 des Prozessors 101 voneinander getrennt. Auf diese Weise kann die Sicherheit weiter erhöht werden.

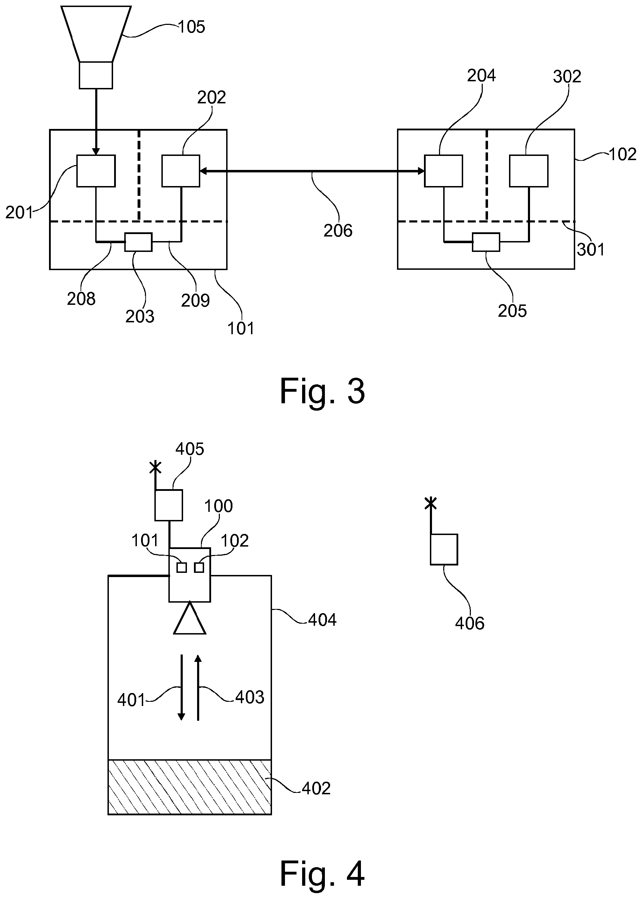

Fig. 3 zeigt ein weiteres Ausführungsbeispiel eines Elektronikmoduls, welches ebenfalls zwei Prozessoren 101, 102 aufweist. Beide Prozessoren weisen jeweils zwei voneinander getrennte Speicherbereiche 201, 202 bzw. 204, 302 auf.

Beispielsweise kann der Datentransfer von dem ersten, besonders gut gesicherten Speicherbereich 201 des einen Prozessors zum zweiten Speicherbereich 202 lediglich unidirektional erfolgen. Es ist nicht möglich, dass Daten vom zweiten Speicherbereich 202 in den ersten Speicherbereich 201 gelangen.

Auf diese Weise kann die Datensicherheit noch weiter erhöht werden.

Ein Datenaustausch zwischen den beiden Prozessoren kann lediglich zwischen dem zweiten Speicherbereich 202 des einen Prozessors 101 und dem ersten Speicherbereich 204 des anderen Prozessors 102 stattfinden. Das Betriebssystem 205 des Prozessors 102 steuert den Datenaustausch zwischen den beiden Speicherbereichen 204, 302 des Prozessors 102.

Auch in diesem Prozessor sind die beiden Speicherbereiche 204, 302 voneinander getrennt (siehe gestrichelte Linie 301).

Handelt es sich bei dem Feldgerät um ein Füllstandsmessgerät nach dem Radar-Prinzip, ist der zweite Prozessor zur Steuerung des HF-Frontends, des Verstärkers und der Berechnung der Messwerte sowie zur Steuerung des Stromausgangs, der dem Messwert entspricht, ausgeführt. Der erste Prozessor steuert ein Anzeige- und Bedienmodul und ist für die Kommunikation zuständig. Die Kommunikation kann z. B. nach dem HART Standard erfolgen.

Handelt es sich bei dem Feldgerät um ein Feldbus-Gerät, das über den Profibus oder den Foundation Fieldbus Standard kommuniziert, führt der zweite Prozessor zusätzlich die sicherheitskritische Schicht der Kommunikation durch. Der erste Prozessor führt die unteren, nicht-sicherheitskritischen Schichten der Kommunikation aus.

Auf eben diese Weise können auch radiometrische Füllstands- oder Dichtesensoren ausgeführt sein.

Fig. 4 zeigt ein Füllstandsmessgerät 100, das in einem Tank 404 eingebaut ist und ein Elektronikmodul mit zwei voneinander getrennten Prozessoren 101, 102 aufweist. Das Füllstandsmessgerät 100 sendet ein Messsignal 401 in Richtung der Oberfläche des Füllguts 402 aus. Dieses Messsignal wird auf der Oberfläche des Füllguts reflektiert und das entsprechende Empfangssignal 403 wird anschließend vom Füllstandsmessgerät 100 aufgenommen und ausgewertet. Über ein Kommunikationsmodul 405 ist eine Kommunikation mit einer externen Auswerteeinheit 406 möglich. Die Kommunikation mit der externen Auswerteeinheit kann drahtgebunden oder drahtlos erfolgen.

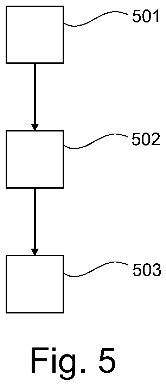

Fig. 5 zeigt ein Flussdiagramm eines Verfahrens gemäß einem Ausführungsbeispiel der Erfindung. In Schritt 501 erfolgt die Ausführung von sicherheitskritischen Funktionen des Feldgeräts durch einen zweiten Prozessor. In Schritt 502 erfolgt die Ausführung von nicht-sicherheitskritischen Funktionen des Feldgeräts durch einen ersten Prozessor. In Schritt 503 werden Daten zwischen den beiden Prozessoren ausgetauscht. Dieser Datenaustausch wird über ein Echtzeit-Betriebssystem des Feldgeräts gesteuert.

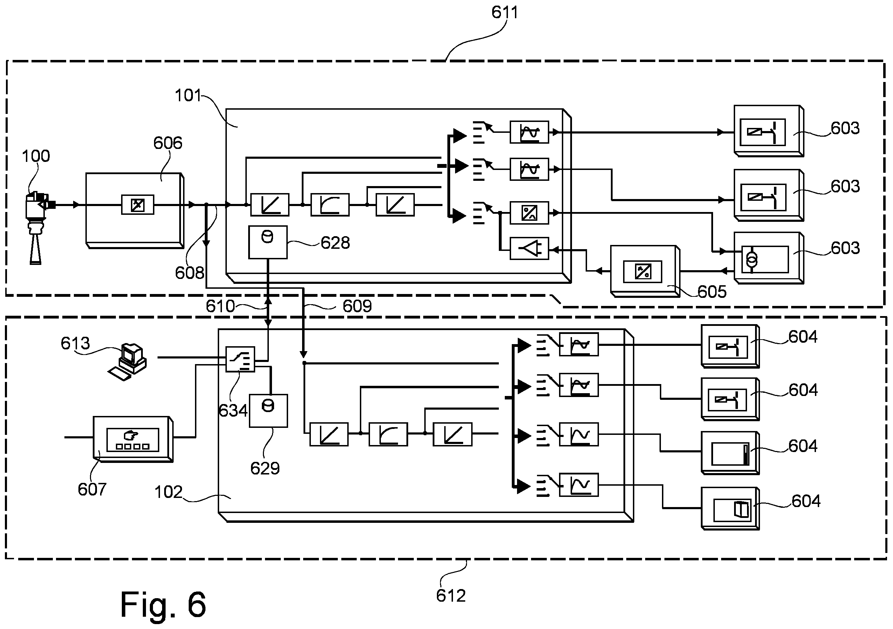

Fig. 6 zeigt eine Schaltung für ein Auswertegerät gemäß einem Ausführungsbeispiel der Erfindung. Das Auswertegerät ist an einen Füllstandsensor 100 angeschlossen. Auch kann es an einen Drucksensor oder einen Dichtesensor oder einen Sensor für eine andere physikalische Größe angeschlossen sein.

Das Auswertegerät zeichnet sich durch eine modulare Bauweise aus, die eine Trennung von sicherheitskritischen und nicht-sicherheitskritischen Aufgaben ermöglicht.

Insbesondere weist das Auswertegerät zwei Prozessoren 101, 102 auf. Der erste Prozessor 102 liegt im sog. nicht-sicherheitskritischen Pfad des Auswertegeräts, der einem entsprechend geringem Sicherheitsstandard genügt. Der andere Prozessor 101 ist im sicherheitskritischen Pfad des Auswertegeräts angeordnet, der einem erhöhtem Sicherheitsstandard genügt.

Der sicherheitskritische Pfad und der nicht-sicherheitskritische Pfad sind durch die gestrichelten Kästen 611, 612 dargestellt.

Das Elektronikmodul (bzw. das Messgerät oder das Auswertegerät) ist mit mindestens zwei Prozessoren 101, 102 aufgebaut. Ein Prozessor 101 übernimmt die Aufgaben, die der Sicherheitsfunktion zuzuordnen sind, z. B. die Steuerung der SIL-Ausgänge, die Messung, das Durchführen von erforderlichen Diagnosemaßnahmen. Der zweite Prozessor 102 führt die nicht-sicherheitskritischen Aufgaben, wie z. B. die Bedienung oder Kommunikation, aus und steuert die Nicht-SIL-Ausgänge. Beide Prozessoren 101, 102 kommunizieren miteinander. Hierfür ist die Kommunikationsleitung 610, beispielsweise zwischen dem Parameterspeicher 628 und der Weiche 634, vorgesehen. Auch der Parameterspeicher 629 ist an die Weiche 634 angeschlossen.

Der Prozessor 101 führt auf Grundlage des von dem A/D-Wandler 606 gelieferten Sensorwertes vom Sensor 100 die Berechnung des Messwertes aus und steuert die SIL-Ausgänge 603 entsprechend. Die SIL-Ausgänge 603 können Relais oder Stromausgänge sein. Handelt es sich um einen Stromausgang, ist für die Diagnose des Stromausgangs ein weiterer A/D-Wandler 605 nötig, der zwischen dem entsprechenden SIL-Ausgang und dem Prozessor 101 geschaltet ist.

Der A/D-Wandler 606 ist über die Leitung 608 mit dem Prozessor 101 verbunden. Weiterhin ist dieser Wandler 606 über die Leitung 609 mit dem anderen Prozessor 102 verbunden.

Der im nicht-sicherheitskritischen Pfad 612 angeordnete Prozessor 102 führt ebenfalls auf Grundlage des von dem A/D-Wandler 606 gelieferten Sensorwertes die Berechnung des Messwertes aus und steuert damit die Nicht-SIL-Ausgänge 604. Außerdem ist der Prozessor 102 für die Bedienung des Sensors und für die Kommunikation (beispielsweise zwischen dem Sensor und einem Anzeige- und Bediengerät) zuständig. Hierfür sind entsprechende Anschlüsse vorgesehen, über welche beispielsweise ein Computer 613 (über z.B. eine USB-, eine RS232- oder eine Ethernet-Schnittstelle) oder eine Gerätebedieneinheit 607 angeschlossen werden können. Über den PC 613 kann die Kommunikation erfolgen.

Aufgrund der modularen Bauweise des Auswertegeräts kann bei einer Nicht-SIL-Ausführung des Auswertegerätes auf den Prozessor 101, der die Sicherheitsfunktion ausführt, sowie auf den A/D-Wandler 605 und die SIL-Ausgänge 603 verzichtet werden. In diesem Fall werden sämtliche Sensordaten über die Kommunikationsleitung 609 an den Prozessor 102 übergeben. Durch die modulartige Trennung zwischen sicherheitskritischen und nicht-sicherheitskritischen Software- und Hardwareteilen erfolgt lediglich eine unterschiedliche Hardware-Bestückung für die SIL- und die Nicht-SIL-Ausführung der Elektronikeinheit.

Statt einem Sensor 100 im sicherheitskritischen Pfad können auch mehrere Sensoren im sicherheitskritischen Pfad angeschlossen sein. Die Sensorwerte können sowohl von dem Prozessor 102 als auch von dem Prozessor 101 verarbeitet werden. Auch ist ein zusätzlicher Anschluss von Sensoren nur an den Prozessor 102 möglich. Bei diesen Sensoren handelt es sich um solche Sensoren, die nur für die Messwertverarbeitung im nicht-sicherheitskritischen Pfad zur Verfügung stehen.

Es erfolgt also eine Trennung zwischen sicherheitskritischen und nicht-sicherheitskritischen Software- und Hardwareteilen. Nicht-sicherheitskritische Teile können die Sicherheitsfunktion nicht beeinträchtigen. Sicherheitsstandards müssen nur für diejenigen Teile des Geräts angewandt werden, die im sicherheitskritischen Pfad liegen. Das Ergebnis ist ein Auswertegerät oder allgemein eine Elektronikeinheit, welche durch Bestückung mit einem Prozessor in nicht-sicherheitskritischen Anwendungen eingesetzt werden kann, während bei einer Bestückung mit zwei oder mehr Prozessoren ein Einsatz auch in sicherheitskritischen Anwendungen möglich ist.

Bei nicht-sicherheitskritischen Anwendungen ist also der sicherheitskritische Pfad entbehrlich. Auch ist keine Diagnoseschaltung in einem solchen sicherheitskritischen Pfad notwendig.

Durch den modularen Aufbau ist es möglich, durch einfache Um- oder Nichtbestückung ohne spezielle neue Firmware eine Ausführungsform für sicherheitskritische Anwendungen zusammenzustellen und eine zweite, einfachere Ausführungsform für nicht-sicherheitskritische Anwendungen.

Ergänzend ist darauf hinzuweisen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektronikeinheit für die Füllstandmessung, die Druckmessung oder die Dichtemessung eines Mediums in einem Behälter, insbesondere für ein Messgerät oder ein Auswertgerät, die Elektronikeinheit aufweisend:
einen ersten Prozessor (102), aufweisend einen ersten Speicherbereich (204); und
einen zweiten Prozessor (101), der zum Empfangen von Messsignalen eines Füllstandsensors, Druckmessgeräts oder Dichtemessgeräts (100) eingerichtet ist, wobei der zweite Prozessor (101) einen zweiten Speicherbereich aufweist, und
wobei der zweite Speicherbereich in zumindest einen dritten Speicherbereich (201) und einen vierten Speicherbereich (202) aufgeteilt ist, die voneinander getrennt sind,
wobei der dritte Speicherbereich (201) diejenigen Programmmodule speichert, die zum sicheren Betrieb des Füllstandsensors, Druckmessgeräts oder Dichtemessgeräts (100) benötigt werden und somit als sicherheitskritisch eingestuft sind, und
wobei der vierte Speicherbereich (202) diejenigen Daten speichert, die zum Übertragen an den ersten Prozessor (102) vorgesehen sind;
wobei der erste Prozessor (102) und der zweite Prozessor (101) zum Ausführen von Programmmodulen ausgeführt sind;
wobei die Elektronikeinheit zum Ausführen von sicherheitskritischen und nicht-sicherheitskritischen Programmmodulen ausgeführt ist;
wobei der erste Prozessor (102) zum Ausführen nur der nicht-sicherheitskritischen Funktion und der zweite Prozessor (101) zum Ausführen der sicherheitskritischen Funktion ausgeführt ist;
wobei der zweite Prozessor (101) höheren Sicherheitsanforderungen genügt als der erste Prozessor (102);
wobei der erste Prozessor (102) und der zweite Prozessor (101) zum gegenseitigen Datenaustausch ausgeführt sind;
wobei die Elektronikeinheit dazu eingerichtet ist, dass ein Datenaustausch von dem zweiten Prozessor (101) zu dem ersten Prozessor (102) lediglich zwischen dem zweiten Speicherbereich des zweiten Prozessors (101) und dem ersten Speicherbereich (204) des ersten Prozessors (102) stattfindet, und
wobei die Elektronikeinheit dazu eingerichtet ist, dass ein Datentransfer von dem dritten Speicherbereich (201) zu dem vierten Speicherbereich (202) lediglich unidirektional erfolgt.

2. Elektronikeinheit nach Anspruch 1,
wobei die Elektronikeinheit auch zum Betrieb ohne den zweiten Prozessor (101) ausgeführt ist.

3. Elektronikeinheit nach Anspruch 1 oder 2,
wobei weiterhin ein Echtzeit-Betriebssystem (203) vorgesehen ist, das den Sicherheitsanforderungen der Elektronikeinheit entspricht und zur Steuerung des Datenaustauschs zwischen den Prozessoren (101, 102) ausgeführt ist.

4. Elektronikeinheit nach einem der vorhergehenden Ansprüche,
wobei die beiden Prozessoren (101, 102) derart voneinander getrennt sind, dass Daten in einem Speicher (201) des zweiten Prozessors (101) unabhängig von Daten in einem Speicher (204) des ersten Prozessors (102) sind.

5. Elektronikeinheit nach einem der vorhergehenden Ansprüche,
wobei die sicherheitskritischen Programmmodule ausgewählt sind aus der Gruppe aufweisend Messwertbestimmung auf Basis von Sensormessdaten, Ableitung von weiteren Messwerten aus Basis bereits bestimmter Messwerte, Ausgabe von Messwerten, und Diagnose.

6. Elektronikeinheit nach einem der vorhergehenden Ansprüche,
wobei die nicht-sicherheitskritischen Programmmodule ausgewählt sind aus der Gruppe aufweisend Verbindungsherstellung zu einer externen Kommunikationseinheit (405), Aufzeichnung von Messwerten mit Statusinformation über die Zeit, Messwertanzeige, und Werteeinstellung im Feldgerät.

7. Elektronikeinheit nach einem der vorhergehenden Ansprüche,
wobei die Elektronikeinheit Bestandteil des Füllstandsensors, Druckmessgeräts oder Dichtemessgeräts (100) ist.

8. Elektronikeinheit nach Anspruch 7,
wobei eine Kommunikation mit einer externen Kommunikationseinheit (405) auf Basis eines Profibus Standards oder eines Foundation Fieldbus Standards erfogt;
wobei der zweite Prozessor (101) sicherheitskritische Schichten der Kommunikation ausführt und wobei der erste Prozessor (102) nicht-sicherheitskritische Schichten der Kommunikation ausführt.

9. Elektronikeinheit nach einem der Ansprüche 1 bis 6,
wobei die Elektronikeinheit Bestandteil eines Auswertegeräts oder eines Anzeige- und Bediengeräts ist.

10. Verfahren zur Messung und Bestimmung eines Füllstands, eines Drucks oder einer Dichte eines Mediums in einem Behälter durch ein Feldgerät, das Verfahren aufweisend die Schritte:
Ausführen nur von nicht-sicherheitskritischen Programmmodulen des Feldgeräts durch einen ersten Prozessor (102), aufweisend einen ersten Speicherbereich (204);
Empfangen von Messsignalen eines Füllstandsensors, Druckmessgeräts oder Dichtemessgeräts (100) in einem zweiten Prozessor (101), wobei der zweite Prozessor (101) einen zweiten Speicherbereich aufweist, und
wobei der zweite Speicherbereich in zumindest einen dritten Speicherbereich (201) und einen vierten Speicherbereich (202) aufgeteilt ist, die voneinander getrennt sind,
wobei der dritte Speicherbereich (201) diejenigen Programmmodule speichert, die zum sicheren Betrieb des Füllstandsensors, Druckmessgeräts oder Dichtemessgeräts (100) benötigt werden und somit als sicherheitskritisch eingestuft sind, und
wobei der vierte Speicherbereich (202) diejenigen Daten speichert, die zum Übertragen an den ersten Prozessor (102) vorgesehen sind; und
Ausführen von sicherheitskritischen Programmmodulen des Feldgeräts durch den zweiten Prozessor (101), der höheren Sicherheitsanforderungen genügt als der erste Prozessor (102),
wobei der erste Prozessor (102) und der zweite Prozessor (101) zum gegenseitigen Datenaustausch ausgeführt sind;
wobei die Elektronikeinheit dazu eingerichtet ist, dass ein Datenaustausch von dem zweiten Prozessor (101) zu dem ersten Prozessor (102) lediglich zwischen dem zweiten Speicherbereich des zweiten Prozessors (101) und dem ersten Speicherbereich (204) des ersten Prozessors (102) stattfindet, und
wobei die Elektronikeinheit dazu eingerichtet ist, dass ein Datentransfer von dem dritten Speicherbereich (201) zu dem vierten Speicherbereich (202) lediglich unidirektional erfolgt.

11. Programmelement zur Messung und Bestimmung eines Füllstands, eines Drucks oder einer Dichte eines Mediums in einem Behälter durch ein Feldgerät, das, wenn es auf zwei Prozessoren des Feldgeräts ausgeführt wird, die Prozessoren anleitet, die Schritte des Verfahrens nach Anspruch 10 durchzuführen.

12. Computerlesbares Medium, auf dem ein Programmelement zur Messung und Bestimmung eines Füllstands, eines Drucks oder einer Dichte eines Mediums in einem Behälter durch ein Feldgerät gespeichert ist, das, wenn es auf zwei Prozessoren des Feldgeräts ausgeführt wird, die Prozessoren anleitet, die Schritte des Verfahrens nach Anspruch 10 durchzuführen.

## Claims

1. An electronic unit for fill level measurement, pressure measurement or density measurement of a medium in a vessel, in particular for a measuring device or an evaluation device, the electronic unit comprising:
a first processor (102) comprising a first memory area (204); and
a second processor (101) configured to receive measurement signals of a fill level sensor, pressure gauge or density meter (100), the second processor (101) having a second memory area, and
wherein the second memory area is divided into at least a third memory area (201) and a fourth memory area (202) which are separate from each other,
wherein the third memory area (201) stores those program modules which are required for the safe operation of the fill level sensor, pressure gauge or density meter (100) and are thus classified as safety-critical, and
wherein the fourth memory area (202) stores the data intended for transmission to the first processor (102);
wherein the first processor (102) and the second processor (101) are configured to execute program modules;
wherein the electronic unit is configured to execute safety-critical and non-safety-critical program modules;
wherein the first processor (102) is configured to perform only the non-safety-critical program modules and the second processor (101) is configured to perform the safety-critical program modules;
wherein the second processor (101) satisfies higher security requirements than the first processor (102);
wherein the first processor (102) and the second processor (101) are configured to exchange data with each other;
wherein the electronic unit is configured that data exchange from the second processor (101) to the first processor (102) takes place only between the second memory area of the second processor (101) and the first memory area (204) of the first processor (102), and
wherein the electronic unit is configured that a data transfer from the third memory area (201) to the fourth memory area (202) is only unidirectional.

2. The electronic unit according to claim 1,
wherein the electronic unit is also designed to operate without the second processor (101).

3. The electronic unit according to claim 1 or 2,
wherein further a real-time operating system (203) is provided, which meets the safety requirements of the electronic unit and is designed to control the data exchange between the processors (101, 102).

4. The electronic unit according to one of the preceding claims,
wherein the two processors (101, 102) are separated from each other such that data in a memory (201) of the second processor (101) is independent of data in a memory (204) of the first processor (102).

5. The electronic unit according to any one of the foregoing claims,
wherein the safety-critical program modules are selected from a group comprising determination of measured values on the basis of sensor measured data, derivation of further measured values on the basis of already determined measured values, output of measured values, and diagnosis.

6. The electronic unit according to any one of the preceding claims,
wherein the non-safety critical program modules are selected from the group comprising connection establishment to an external communication unit (405), recording of measured values with status information overtime, measured value display, and value setting in the field device.

7. The electronic unit according to any one of the preceding claims,
wherein the electronic unit is a component of the fill level sensor, pressure gauge or density meter (100).

8. The electronic unit according to claim 7,
wherein a communication with an external communication unit (405) is performed based on a Profibus standard or a Foundation Fieldbus standard;
wherein the second processor (101) executes safety critical layers of the communication and wherein the first processor (102) executes non-safety critical layers of the communication.

9. The electronic unit according to any one of claims 1 to 6,
wherein the electronic unit is part of an evaluation device or a display and operating device.

10. A method for measuring and determining a fill level, pressure or density of a medium in a container by a field device, the method comprising the steps of:
executing only non-safety critical program modules of the field device by a first processor (102) comprising a first memory area (204);
receiving measurement signals from a fill level sensor, pressure gauge or density meter (100) in a second processor (101), wherein the second processor (101) has a second memory area; and
wherein the second memory area is divided into at least a third memory area (201) and a fourth memory area (202) which are separate from each other,
wherein the third memory area (201) stores those program modules which are required for the safe operation of the fill level sensor, pressure gauge or density meter (100) and are thus classified as safety-critical, and
wherein the fourth memory area (202) stores the data intended for transmission to the first processor (102); and
executing safety-critical program modules of the field device by the second processor (101), which satisfies higher safety requirements than the first processor (102),
wherein the first processor (102) and the second processor (101) are designed to exchange data with each other;
wherein the electronic unit is configured that data exchange from the second processor (101) to the first processor (102) takes place only between the second memory area of the second processor (101) and the first memory area (204) of the first processor (102), and
wherein the electronic unit is configured that a data transfer from the third memory area (201) to the fourth memory area (202) is only unidirectional.

11. A program element for measuring and determining a fill level, pressure or density of a medium in a container by a field device which, when executed on two processors of the field device, instructs the processors to perform the steps of the method according to claim 10.

12. A computer readable medium having stored thereon a program element for measuring and determining a fill level, pressure or density of a medium in a container by a field device which, when executed on two processors of the field device, instructs the processors to perform the steps of the method of claim 10.

## Revendications

1. Unité électronique pour la mesure de niveau de remplissage, la mesure de pression ou la mesure de densité d'un milieu dans un récipient, en particulier pour un appareil de mesure ou un appareil d'évaluation, l'unité électronique présentant :
un premier processeur (102), présentant une première zone de mémoire (204) ; et
un deuxième processeur (101), qui est adapté à recevoir des signaux de mesure d'un capteur de niveau de remplissage, d'un appareil de mesure de pression ou d'un appareil de mesure de densité (100), le deuxième processeur (101) présentant une deuxième zone de mémoire, et
dans laquelle la deuxième zone de mémoire est divisée en au moins une troisième zone de mémoire (201) et une quatrième zone de mémoire (202) qui sont séparées l'une de l'autre,
dans laquelle la troisième zone de mémoire (201) stocke les modules de programme qui sont nécessaires au fonctionnement sûr du capteur de niveau de remplissage, de l'appareil de mesure de pression ou de l'appareil de mesure de densité (100) et qui sont donc classés comme critiques pour la sécurité, et dans laquelle la quatrième zone de mémoire (202) stocke les données qui sont destinées à être transmises au premier processeur (102) ;
dans laquelle le premier processeur (102) et le deuxième processeur (101) sont conçus pour exécuter des modules de programme ;
dans laquelle l'unité électronique est conçue pour exécuter des modules de programme critiques pour la sécurité et non critiques pour la sécurité ;
dans laquelle le premier processeur (102) est conçu pour exécuter uniquement la fonction non critique pour la sécurité et le deuxième processeur (101) est conçu pour exécuter la fonction critique pour la sécurité ;
dans laquelle le deuxième processeur (101) satisfait à des exigences de sécurité plus élevées que le premier processeur (102) ;
dans laquelle le premier processeur (102) et le deuxième processeur (101) sont conçus pour échanger des données entre eux ;
dans laquelle l'unité électronique est adaptée à ce qu'un échange de données entre le deuxième processeur (101) et le premier processeur (102) ait lieu uniquement entre la deuxième zone de mémoire du deuxième processeur (101) et la première zone de mémoire (204) du premier processeur (102), et
dans laquelle l'unité électronique est adaptée à ce qu'un transfert de données de la troisième zone de mémoire (201) vers la quatrième zone de mémoire (202) ait lieu uniquement de manière unidirectionnelle.

2. Unité électronique selon la revendication 1,
dans laquelle l'unité électronique est également conçue pour fonctionner sans le deuxième processeur (101).

3. Unité électronique selon la revendication 1 ou 2,
dans laquelle est également prévu un système d'exploitation en temps réel (203) qui répond aux exigences de sécurité de l'unité électronique et qui est conçu pour commander l'échange de données entre les processeurs (101, 102).

4. Unité électronique selon l'une des revendications précédentes,
dans laquelle les deux processeurs (101, 102) sont séparés l'un de l'autre de telle sorte que les données dans une mémoire (201) du deuxième processeur (101) sont indépendantes des données dans une mémoire (204) du premier processeur (102).

5. Unité électronique selon l'une des revendications précédentes,
dans laquelle les modules de programme critiques pour la sécurité sont choisis dans le groupe constitué par la détermination de valeurs de mesure sur la base de données de mesure de capteurs, la dérivation d'autres valeurs de mesure sur la base de valeurs de mesure déjà déterminées, la sortie de valeurs de mesure et le diagnostic.

6. Unité électronique selon l'une des revendications précédentes,
dans laquelle les modules de programme non critiques pour la sécurité sont choisis dans le groupe constitué par l'établissement d'une liaison avec une unité de communication externe (405), l'enregistrement de valeurs de mesure avec des informations d'état en fonction du temps, l'affichage de valeurs de mesure et le réglage de valeurs dans l'appareil de terrain.

7. Unité électronique selon l'une des revendications précédentes,
dans laquelle l'unité électronique est un composant du capteur de niveau de remplissage, de l'appareil de mesure de pression ou de l'appareil de mesure de densité (100).

8. Unité électronique selon la revendication 7,
dans laquelle la communication avec une unité de communication externe (405) a lieu sur la base d'une norme Profibus ou d'une norme Foundation Fieldbus ;
dans laquelle le deuxième processeur (101) exécute les couches critiques pour la sécurité de la communication et dans laquelle le premier processeur (102) exécute les couches non critiques pour la sécurité de la communication.

9. Unité électronique selon l'une des revendications 1 à 6, dans laquelle l'unité électronique est un composant d'un appareil d'évaluation ou d'un appareil d'affichage et de commande.

10. Procédé de mesure et de détermination d'un niveau de remplissage, d'une pression ou d'une densité d'un milieu dans un récipient par un appareil de terrain, le procédé présentant les étapes suivantes :
exécution des seuls modules de programme non critiques pour la sécurité de l'appareil de terrain par un premier processeur (102) présentant une première zone de mémoire (204) ;
réception de signaux de mesure provenant d'un capteur de niveau de remplissage, d'un appareil de mesure de pression ou
d'un appareil de mesure de densité (100) dans un deuxième processeur (101), le deuxième processeur (101) présentant une deuxième zone de mémoire ; et
dans lequel la deuxième zone de mémoire est divisée en au moins une troisième zone de mémoire (201) et une quatrième zone de mémoire (202) qui sont séparées l'une de l'autre,
dans lequel la troisième zone de mémoire (201) stocke les modules de programme qui sont nécessaires au fonctionnement sûr du capteur de niveau de remplissage, de l'appareil de mesure de pression ou de l'appareil de mesure de densité (100) et qui sont donc classés comme critiques pour la sécurité, et dans lequel la quatrième zone de mémoire (202) stocke les données qui sont destinées à être transmises au premier processeur (102) ; et
exécution des modules de programme critiques pour la sécurité de l'appareil de terrain par le deuxième processeur (101), qui satisfait à des exigences de sécurité plus élevées que le premier processeur (102),
dans lequel le premier processeur (102) et le deuxième processeur (101) sont conçus pour échanger des données entre eux ;
dans lequel l'unité électronique est adaptée à ce qu'un échange de données entre le deuxième processeur (101) et le premier processeur (102) ait lieu uniquement entre la deuxième zone de mémoire du deuxième processeur (101) et la première zone de mémoire (204) du premier processeur (102), et
dans lequel l'unité électronique est adaptée à ce qu'un transfert de données de la troisième zone de mémoire (201) vers la quatrième zone de mémoire (202) ait lieu uniquement de manière unidirectionnelle.

11. Élément de programme pour la mesure et la détermination d'un niveau de remplissage, d'une pression ou d'une densité d'un milieu dans un récipient au moyen d'un appareil de terrain, qui, lorsqu'il est exécuté sur deux processeurs de l'appareil de terrain, donne aux processeurs l'instruction d'exécuter les étapes du procédé selon la revendication 10.

12. Support lisible par ordinateur sur lequel est stocké un élément de programme pour la mesure et la détermination d'un niveau de remplissage, d'une pression ou d'une densité d'un milieu dans un récipient au moyen d'un appareil de terrain, qui, lorsqu'il est exécuté sur deux processeurs de l'appareil de terrain, donne aux processeurs l'instruction d'exécuter les étapes du procédé selon la revendication 10.
